(19) Europäisches Patentamt
European Patent Office
Office européen des brevets

(11) **EP 3 985 568 A1**

(12) **EUROPEAN PATENT APPLICATION**

(43) Date of publication:
**20.04.2022 Bulletin 2022/16**

(21) Application number: **21155483.7**

(22) Date of filing: **05.02.2021**

(51) International Patent Classification (IPC):
**G06N 3/04** (2006.01)          **G06F 21/62** (2013.01)
**G06T 3/00** (2006.01)

(52) Cooperative Patent Classification (CPC):
**G06N 3/0454; G06F 21/6254**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020 KR 20200134600**

(71) Applicants:
• **Samsung SDS Co., Ltd.**
  **Seoul 05510 (KR)**
• **Seoul National University R & DB Foundation**
  **Seoul 08826 (KR)**

(72) Inventors:
• **JEONG, Yong Hyun**
  **05510 Seoul (KR)**

• **BAE, Chang Hyeon**
  **05510 Seoul (KR)**
• **YOON, Sung Roh**
  **06276 Seoul (KR)**
• **HA, Heon Seok**
  **51738 Changwon-si, Gyeongsangnam-do (KR)**
• **KIM, Sung Won**
  **06509 Seoul (KR)**
• **CHOI, Joo Young**
  **08787 Seoul (KR)**

(74) Representative: **Grünecker Patent- und Rechtsanwälte**
**PartG mbB**
**Leopoldstraße 4**
**80802 München (DE)**

(54) **METHOD AND APPARATUS FOR ANONYMIZING PERSONAL INFORMATION**

(57)    A method and apparatus for anonymizing personal information are disclosed. The apparatus for anonymizing personal information according to an embodiment may comprise an encoder configured to generate an input latent vector by extracting a feature of input data, a generator configured to generate reconstructed data by demodulating a predetermined content vector based on a style vector generated based on the input latent vector, and a discriminator configured to discriminate genuine data and fake data by receiving the reconstructed data and real data.

FIG. 1

EP 3 985 568 A1

**Description**

[TECHNICAL FIELD]

The disclosed embodiments relate to technology for personal information anonymization.

[BACKGROUND ART OF THE INVENTION]

In general, a change of personal information data through differential privacy technology is accomplished by disturbing data by adding noise to original data for which information is not protected. In recent years, technologies based on deep neural networks such as generative adversarial network (GAN) are used for personal information protection (anonymization) using differential privacy.

However, in the case of GAN, a Nash equilibrium that solves the MinMax problem between Generator and Discriminator should be satisfied. In addition, when noise is added to a gradient used for network learning, the MinMax optimization of GAN may become more difficult, which may cause a problem of deteriorating quality of reconstructed data.

DISCLOSURE OF THE INVENTION

The disclosed embodiments are intended to provide a method and apparatus for anonymizing personal information.

An apparatus for anonymizing personal information according to an embodiment comprises an encoder configured to generate an input latent vector by extracting a feature of input data, a generator configured to generate reconstructed data by demodulating a predetermined content vector based on a style vector generated based on the input latent vector, and a discriminator configured to discriminate genuine data and fake data by receiving the reconstructed data and real data.

The encoder may comprises one or more encoding blocks connected in series, and each of the one or more encoding blocks may include a convolution layer, an instance normalization layer, and a down sampling layer.

The instance normalization layer may generate individual latent vectors by calculating an average and standard deviation of input data input to each encoding block and performing affine transformation.

The encoder may be further configured to generate the input latent vector by performing a weighted summation of one or more individual latent vectors generated by the one or more encoding blocks.

The encoder may be trained based on a total loss generated by performing a weighted summation of a reconstruction loss generated based on a difference between the input data and the reconstructed data and an adversarial loss generated based on a result value of the discriminator for the reconstructed data.

The generator may comprise one or more decoding blocks connected in series, and each of the one or more decoding blocks may comprise a convolution layer, an adaptive instance normalization layer, and an up sampling layer.

Each adaptive instance normalization layer included in the one or more decoding blocks may adjust an average and standard deviation of the content vectors input to each of the one or more decoding blocks based on an average and standard deviation of the style vectors.

The one or more decoding blocks may be classified into two or more decoding block groups according to the order in which the one or more decoding blocks are connected, and different types of style vectors may be input according to the decoding block group.

The style vector may be one of an entire learning latent vector generated by calculating a centroid of all of learning latent vectors included in a learning latent vector set generated by the encoder by receiving a learning data set, one or more class learning latent vectors that are generated by classifying one or more learning latent vectors included in the learning latent vector set according to one or more criteria for each of one or more attributions and calculating the centroid for each classified learning latent vector, and an input latent vector generated based on the input data.

The entire learning latent vector, the class learning latent vector, and the input latent vector may be input to the one or more decoding blocks according to the connected order.

The decoding block may receive a class learning latent vector corresponding to a class to which the input latent vector belongs among the one or more class learning latent vectors.

A method for anonymizing personal information according to an embodiment, comprises generating an input latent vector by extracting a feature of input data, generating reconstructed data by demodulating a predetermined content vector based on a style vector generated based on the input latent vector, and discriminating genuine data and fake data by receiving the reconstructed data and the real data.

The generating of the input latent vector may use one or more encoding blocks connected in series, and each of the one or more encoding blocks may comprise a convolution layer, an instance normalization layer, and a down sampling layer.

The instance normalization layer may generate individual latent vectors by calculating an average and standard deviation of input data input to each encoding block and performing affine transformation.

The generating of the input latent vector may generate the input latent vector by performing a weighted summation of one or more individual latent vectors generated by the one or more encoding blocks.

In the generating the input latent vector, it may be trained based on a total loss generated by performing a weighted summation of a reconstruction loss generated based on a difference between the input data and the reconstructed data and an adversarial loss generated based on a result value of the discriminator for the reconstructed data.

The generating of the reconstructed data may use one or more decoding blocks connected in series, and each of the one or more decoding blocks may comprise a convolution layer, an adaptive instance normalization layer, and an up sampling layer.

According to the disclosed embodiments, it is possible to anonymize personal information while maintaining quality of reconstructed data.

BRIEF DESCRIPTION OF THE DRAWINGS

FIG. 1 is a configuration diagram of an apparatus for anonymizing personal information according to an embodiment.
FIG. 2 is an exemplary diagram illustrating an operation of an encoder according to an embodiment.
FIG. 3 is an exemplary diagram illustrating an operation of a generator according to an embodiment.
FIG. 4 is an exemplary diagram illustrating a structure of the generator according to the embodiment.
FIG. 5 is an exemplary diagram illustrating a method for generating a learning latent vector according to an embodiment.
FIG. 6 is a flowchart of a method for anonymizing personal information according to an embodiment.
FIG. 7 is a block diagram illustratively describing a computing environment including a computing device according to an embodiment.

DETAILED DESCRIPTION

Hereinafter, a specific embodiment of the present invention will be described with reference to the drawings. The following detailed description is provided to aid in a comprehensive understanding of the methods, apparatus and/or systems described herein. However, this is only an example and the present invention is not limited thereto.

In describing the embodiments of the present invention, when it is determined that a detailed description of known technologies related to the present invention may unnecessarily obscure the subject matter of the present invention, a detailed description thereof will be omitted. In addition, terms to be described later are terms defined in consideration of functions in the present invention, which may vary according to the intention or custom of users or operators. Therefore, the definition should be made based on the contents throughout this specification. The terms used in the detailed description are only for describing embodiments of the present invention, and should not be limiting. Unless explicitly used otherwise, expressions in the singular form include the meaning of the plural form. In this description, expressions such as "comprising" or "including" are intended to refer to certain features, numbers, steps, actions, elements, some or combination thereof, and it is not to be construed to exclude the presence or possibility of one or more other features, numbers, steps, actions, elements, parts or combinations thereof, other than those described.

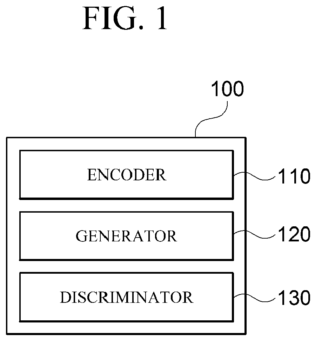

FIG. 1 is a configuration diagram of an apparatus for anonymizing personal information according to an embodiment.

According to an embodiment, a personal information anonymization device 100 may include an encoder 110 that generates an input latent vector by extracting a feature of input data, a generator 120 that generates reconstructed data by demodulating a predetermined content vector based on a style vector generated based on the input latent vector, and a discriminator 130 that discriminates genuine data and fake data by receiving the reconstructed data and the real data.

According to an example, the encoder 110 may extract a feature of each input data by receiving the input data. As an example, the encoder 110 may extract the feature of input data while gradually reducing a size of data (resolution in an image). As an example, there may be a bottleneck structure between the encoder 110 and the generator 120.

According to an example, the encoder 110 may be composed of one or more encoding blocks including one or more layers performing different operations. As an example, one encoding block may include two or more layers performing the same operation with each other.

According to an example, the encoder 110 may perform an instance normalization operation. As an example, the encoder 110 may include a layer that performs the instance normalization operation, and the instance normalization layer may perform affine transformation after calculating an average and standard deviation of the input data. As an example, the encoder 110 may generate an input latent vector by adding a predetermined weight to the results generated by one or more instance normalization layers and summing the weighted results. In this case, the input latent vector may have the feature of the input data. Thereafter, the input latent vector may be used for performing a decoding operation by the generator 120.

According to an embodiment, the generator 120 may generate reconstructed data having the same feature as that of the input data by using the latent vector generated by the encoder 110.

According to an example, the generator 120 may be composed of one or more decoding blocks including one or more layers performing different operations. As an example, one decoding block may include two or more layers performing the same operation with each other. As an example, the generator 120 may include a layer that performs an adaptive instance normalization operation.

According to an example, the generator 120 may receive a latent vector generated by the encoder 110 as a style vector and perform normalization. As an example, the adaptive instance normalization layer may receive a latent vector generated by performing a weighted summation of the results generated by one or more instance normalization layers of the encoder 120 as a style vector.

As another example, the adaptive instance normalization layer may receive each latent vector generated by the instance normalization layer of the encoder 120 as a style vector. As an example, the adaptive instance normalization layer may receive a latent vector generated by the instance normalization layer having the same resolution as the style vector.

As another example, the instance normalization layer may receive a style vector generated based on a latent vector generated by the encoder 110 by receiving a learning data set.

According to an example, the generator 120 may receive a predetermined content vector. As an example, the content vector may be a predetermined constant vector. In this case, the constant vector may be randomly generated.

According to an example, the discriminator 130 may use a generative adversarial network (GAN) structure.

According to an example, the discriminator 130 may discriminate that the reconstructed data as one that is real or fake. As an example, the discriminator 130 may receive real data, and may be learned to discriminate that the reconstructed data is fake and the real data is real.

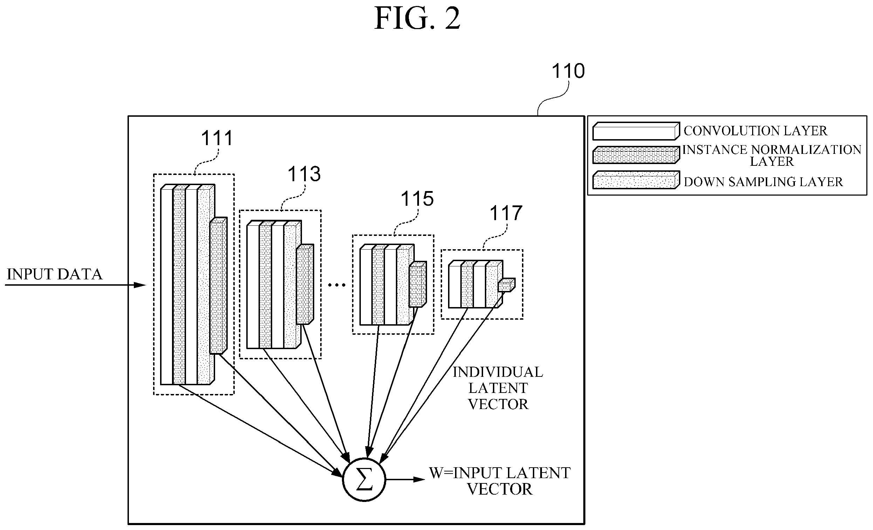

FIG. 2 is an exemplary diagram illustrating an operation of the encoder according to an embodiment.

The encoder 110 may include one or more encoding blocks connected in series. Referring to FIG. 2, the encoder 110 may include encoding blocks 111, 113, 115, and 117. According to an example, each of the encoding blocks 111, 113, 115, and 117 may be connected in series.

As an example, the encoding block 111 at an input stage may receive input data, and the input data processed by the encoding block 111 may be transferred to the next encoding block 113.

According to an example, each of the encoding blocks 111, 113, 115, and 117 may include a convolution layer, an instance normalization layer, and a down sampling layer. According to an example, the encoding block may include one or more layers of the same type.

According to an example, each encoding block may include one or more instance normalization layers. As an example, as illustrated in FIG. 2, two instance normalization layers may be included in one encoding block.

According to an example, each instance normalization layer may generate individual latent vectors by receiving data and performing instance normalization. Referring to FIG. 2, the encoding blocks 111, 113, 115, and 117 may include the instance normalization layer. According to an example, the instance normalization layer may perform normalization using Equation 1 below.

[Equation 1]

$$IN(x) = \gamma \left( \frac{x - \mu(x)}{\sigma(x)} \right) + \beta$$

Here, $\mu(x)$ and $\sigma(x)$ are the average and standard deviation of input data, and β may be any learnable parameter. In the spatial dimension HxW, the average and standard deviation may be defined as in Equation 2.

[Equation 2]

$$\mu(x) = \frac{1}{HW} \sum\nolimits_{h=1}^{H} \sum\nolimits_{w=1}^{W} x_{hw}$$

$$\sigma(x) = \sqrt{\frac{1}{HW} \sum\nolimits_{h=1}^{H} \sum\nolimits_{w=1}^{W} (x_{hw} - \mu(x))^2 + \epsilon}$$

Here, $\epsilon$ may be any learnable parameter.

According to an example, the encoding blocks 111, 113, 115, and 117 may include a down sampling layer. As an example, the encoding block may reduce the size of input data received through downsampling.

According to an embodiment, the instance normalization layer may generate individual latent vectors by calculating an average and standard deviation of input data input to each encoding block and then performing affine transformation.

According to an embodiment, the encoder 110 may generate an input latent vector w by performing a weighted summation of one or more individual latent vectors generated by one or more encoding blocks as illustrated in Equation 3.

[Equation 3]

$$w = \sum_{i=1}^{N} C_i \left[ \frac{\mu(y_i^E)}{\sigma(y_i^E)} \right]$$

Here, $\mu(x)$ and $\sigma(x)$ are the average and standard deviation of the input data, and $C_i$ is a predetermined weight. In addition, the encoder 110 may convert the sizes of individual latent vectors having different sizes into a predetermined size through affine transformation.

According to an embodiment, the encoder 110 may be learned based on a total loss generated by performing a weighted summation of a reconstruction loss generated based on a difference between the input data and the reconstructed data and an adversarial loss generated based on a result value of the discriminator for the reconstructed data.

According to an example, the reconstruction loss may be calculated by pixel-wise comparing whether or not reconstructed data obtained by reconstructing input data is the same as the input data. As an example, the reconstruction loss may be defined as in Equation 4.

[Equation 4]

$$L_{recon} = ||Input - G°E(Input)||_2$$

According to an example, the adversarial loss may be defined as in Equation 5 below.

[Equation 5]

$$L_{adv} = E_{w \sim p_w(w)} \left[ \log \left( 1 - D\left( G°E(w) \right) \right) \right]$$

According to an example, the final loss for allowing the encoder 110 to be learned may be obtained by performing a weighted summation of the reconstruction loss and the adversarial loss as illustrated in Equation 6 below.

[Equation 6]

$$L = a_1 L_{adv} + a_2 L_{recon}$$

Here, $a_1$ and $a_2$ may be hyperparameters.

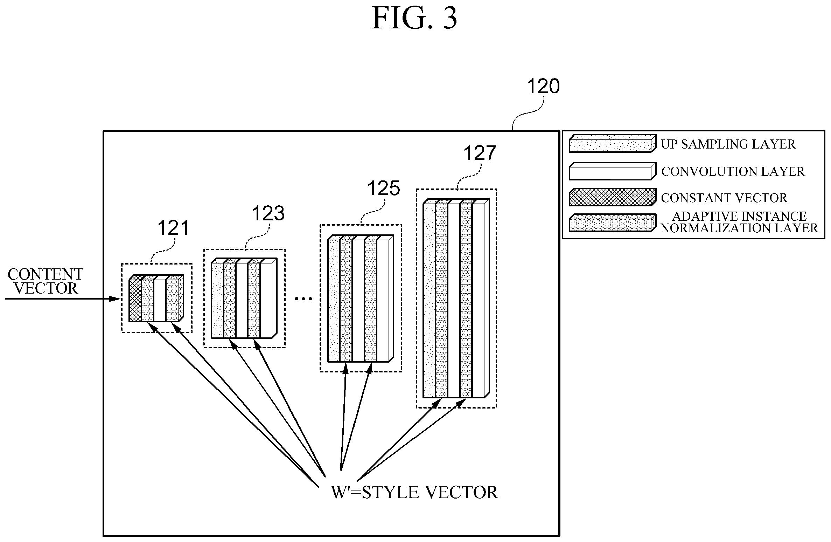

FIG. 3 is an exemplary diagram illustrating an operation of a generator according to an embodiment.

Referring to FIG. 3, the generator 120 may include one or more decoding blocks 121, 123, 125, and 127 connected in series.

According to an embodiment, each of the one or more decoding blocks may include a convolution layer, an adaptive instance normalization layer, and an up sampling layer. According to an example, each decoding block may include one or more layers of the same type.

According to an example, the generator 120 may start decoding by receiving any constant vector. As an example, the constant vector may be a randomly generated constant vector or a constant vector determined through learning.

According to an example, the adaptive instance normalization layer may receive a predetermined style vector, perform affine transformation on a predetermined content vector, and associate the style therewith.

According to an example, the predetermined content vector may be a constant vector, and the style vector may be a latent vector. In other words, the adaptive instance normalization layer may receive a predetermined latent vector, perform affine transformation, and associate the style with a predetermined constant vector.

According to an embodiment, each adaptive instance normalization layer included in one or more decoding blocks may adjust an average and standard deviation of the content vectors input to each of the one or more decoding blocks based on an average and standard deviation of the style vectors.

As an example, the adaptive instance normalization layer may be used to associate the content and style with different data.

According to an example, when the adaptive instance normalization layer receives a content vector input x and a style vector input y, the distribution of x may be standardized and then adjusted by an average and variance of y in units of channels. Accordingly, the adaptive instance normalization layer should calculate the affine parameter each time the style vector y is input. As an example, the affine transformation is one of linear transformations, and may be used to preserve a point, a line, and a plane. In particular, in one example, the affine transformation enables the style to be applied by transforming it into a metric suitable for style association.

As an example, adaptive instance normalization may be defined as in Equation 7.

[Equation 7]

$$AdaIN(x) = \sigma(y)\left(\frac{x - \mu(x)}{\sigma(x)}\right) + \mu(y)$$

According to an embodiment, the generator 120 may be learned based on a total loss generated by performing a weighted summation of the reconstruction loss generated based on the difference between input data and reconstructed data and the adversarial loss generated based on the result value of the discriminator for the reconstructed data. As an example, the reconstruction loss, the adversarial loss, and the total loss may be defined as in Equation 4, Equation 5, and Equation 6 described above, respectively.

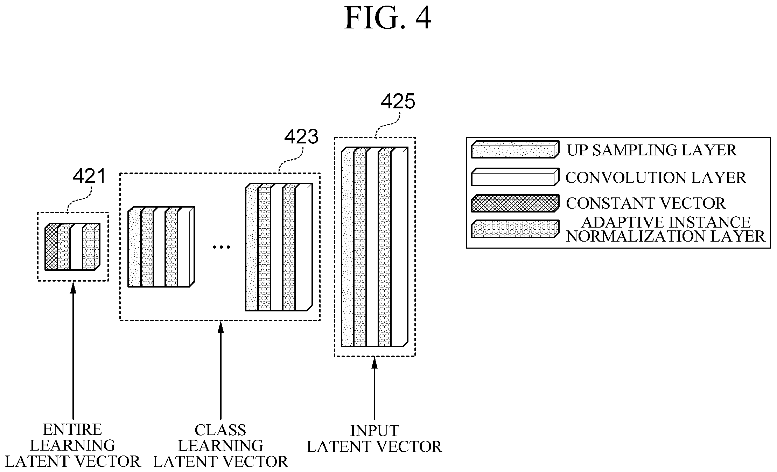

FIG. 4 is an exemplary diagram illustrating a structure of a generator according to an embodiment.

According to an embodiment, one or more decoding blocks are classified into two or more decoding block groups 421, 423, and 425 according to the order in which the one or more decoding blocks are connected, and different types of style vectors may be input according to the decoding block group.

Referring to FIG. 4, the decoding block 421 located at the input stage of the generator 120, the decoding block 423 located in the middle, and the decoding block 425 located at the output stage may receive different types of latent vectors as the style vectors. As an example, the decoding blocks may be classified into a low dimensional decoding vector block, a middle dimensional decoding block, and a high dimensional decoding block in an order close to the input stage.

According to an embodiment, the style vector may be one of an entire learning latent vector generated by calculating a centroid of all of learning latent vectors included in a learning latent vector set generated by the encoder 110 by receiving a learning data set, one or more class learning latent vectors that are generated by classifying one or more learning latent vectors included in the learning latent vector set according to one or more criteria for each of one or more attributions and calculating the centroid for each classified learning latent vector, and an input latent vector generated based on the input data.

According to an example, information input to the low dimensional decoding block may be used to reproduce the most essential information of data. As an example, it is like that, when an image is compressed to low resolution, detailed parts disappear but the feature of the image are maintained. Accordingly, the most average component of data can be input to the low dimensional decoding block.

As illustrated in FIG. 4, each of the low dimensional decoding block, the middle dimensional decoding block, and the high dimensional decoding block may receive different latent vectors w'. As an example, the high dimension may be classified as one having resolution exceeding 64x64. As an example, the low dimension may represent a portion composed of low resolution of features, may correspond to 4x4 to 16x16 with weight and height as a reference, and the middle dimension may correspond to 16x16 to 64x64.

According to an example, a range of low dimension, middle dimension, and high dimension may vary depending on the degree to which anonymization is desired. In addition, the types of latent vectors that enter the low dimension, middle dimension, and high dimension can vary depending on the degree to which anonymization is intended or the purpose of data use.

According to an embodiment, the entire learning latent vector, the class learning latent vector, and the input latent vector may be input to one or more decoding blocks according to the connected order.

According to an example, since the latent vector input to the low dimensional decoding block stores the most essential information of the data when reconstructing, it is preferable to input the centroid latent vector of the entire data set representing the data set rather than inputting the latent vector of the data intended to be modulated. As an example, the entire learning latent vector for the overall feature of the input data may be input to the decoding block 421 corresponding to the low dimensional decoding block.

According to an example, it is preferable to input a centroid latent vector of an attribution representing a specific attribution to the middle dimensional decoding block, and to input a latent vector of data intended to be modulated to the high dimensional decoding block. As an example, a class learning latent vector representing the specific attribution may be input to the decoding block 423 corresponding to the middle dimensional decoding block. As an example, an input latent vector for input data input to the encoder 110 may be input to the decoding block 425 corresponding to the high dimensional decoding block.

According to an example, information of an input image used when reproducing the low dimension in a style conversion of an image helps to reproduce coarse information. As an example, the low dimensional decoding block may reproduce a posture, facial contour, and color. On the other hand, the middle dimensional decoding block can reproduce hairstyles and blinking eyes. In addition, the high dimensional decoding block can reproduce a fine structure.

As an example, since the latent vector input to the low dimensional decoding block occupies the most important portion in reconstructing data, it is highly likely that the latent vector input to the low dimensional decoding block contains the most personal information attributions.

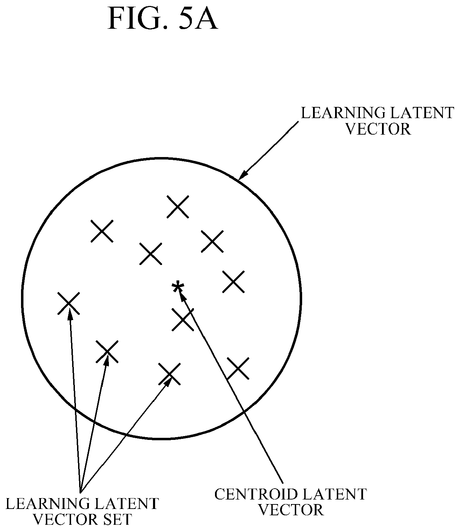

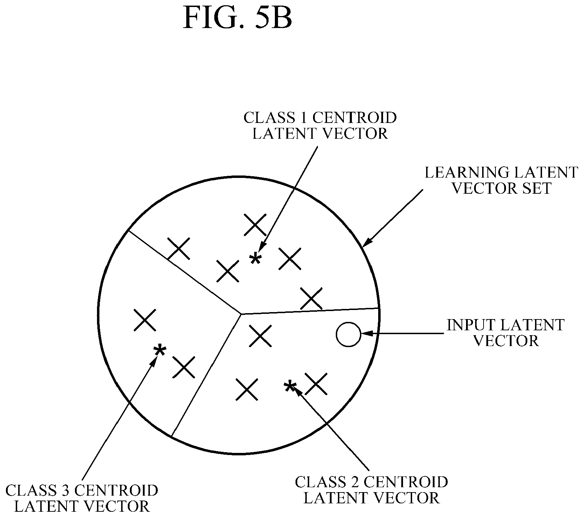

FIG. 5 is an exemplary diagram illustrating a method for generating a learning latent vector according to an embodiment.

Referring to FIG. 5A, the encoder 110 may construct a learning latent vector set by generating a learning latent vector for a predetermined learning data set. For example, the entire training data set used for learning may be mapped to a latent space with the learned encoder 110, and the centroid of all latent spaces may be calculated to derive the centroid latent vector which most common and represents the entire data.

Referring to FIG. 5B, in the latent space corresponding to the learning data set, a class may be generated by applying a predetermined criterion for each attribution. Thereafter, a representative latent vector having specific information can be obtained through the centroid latent vector of the latent space composed of the learning latent vectors belonging to each class.

According to an example, the attribution may be any one of gender, age, and race. As an example, in the case of gender attribution, a male or female may be a predetermined criterion. Accordingly, as the learning latent vector according to gender attribution, a learning latent vector corresponding to a male and a learning latent vector corresponding to a female may be generated.

As an example, in the case of age attribution, teenagers, 20s, 30s, 40s may be a predetermined criterion. Accordingly, as the learning latent vector according to the age attribution, a learning latent vector corresponding to teenagers, a learning latent vector corresponding to 20s, a learning latent vector corresponding to 30s, and a learning latent vector corresponding to 40s may be generated.

As an example, in the case of race attribution, a yellow person, a black person, and a white person may be a predetermined criterion. Accordingly, as the learning latent vector according to the race attribution, a learning latent vector corresponding to the yellow person, a learning latent vector corresponding to the black person, and a learning latent vector corresponding to the white person may be generated.

According to an embodiment, the decoding block may receive the class learning latent vector corresponding to the class to which the input latent vector belongs among one or more class learning latent vectors.

According to an example, the middle dimensional decoding block may receive the class learning latent vector as the style vector. In this case, the class learning latent vector may be the class learning latent vector corresponding to the class to which the input latent vector belongs.

Referring to FIG. 5B, the input latent vector may correspond to Class 2. Accordingly, when a style vector for a specific attribution is input to the decoding block, a Class 2 learning latent vector may be input as the style vector.

As an example, as a result of extracting the feature of the input data, if the feature is a white person, 30s, and a male, the decoding block 423 corresponding to the middle dimensional decoding block may receive a centroid vector of the learning latent vector belonging to a white class, a centroid vector of the learning latent vector belonging to a 30s class, and a centroid vector of the latent learning vector belonging to the male class as style vectors, respectively.

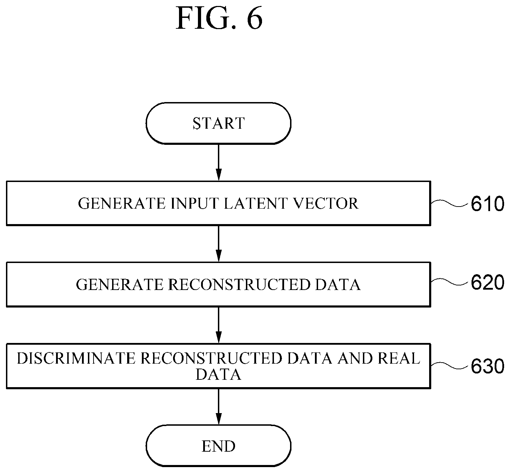

FIG. 6 is a flowchart of a method for anonymizing personal information according to an embodiment.

According to an embodiment, the apparatus for anonymizing personal information may generate an input latent vector by extracting a feature of input data (610).

According to an example, the apparatus for anonymizing personal information may receive the input data to extract the feature of each input data. As an example, the apparatus for anonymizing personal information may extract the feature of the input data while gradually reducing a size of data (resolution in an image). As an example, the apparatus for anonymizing personal information may have a bottleneck structure.

According to an example, the apparatus for anonymizing personal information may be composed of one or more encoding blocks including one or more layers performing different operations. As an example, one encoding block may include two or more layers performing the same operation with each other.

According to an example, the apparatus for anonymizing personal information may perform the instance normalization operation. As an example, the apparatus for anonymizing personal information may include a layer that performs the instance normalization operation, and the instance normalization layer may perform affine transformation after calculating an average and standard deviation of the input data. As an example, the apparatus for anonymizing personal information may generate an input latent vector by adding a predetermined weight to the results generated by one or more instance normalization layers and summing the weighted results. In this case, the input latent vector may have a feature of the input data. Thereafter, the input latent vector may be used for performing the decoding operation.

According to an embodiment, the apparatus for anonymizing personal information may generate the reconstructed data by demodulating a predetermined content vector based on the style vector generated based on the input latent vector (620).

According to an embodiment, the apparatus for anonymizing personal information may generate reconstructed data having the same feature as that of the input data by using a latent vector generated by performing encoding.

According to an example, the apparatus for anonymizing personal information may be composed of one or more decoding blocks including one or more layers performing different operations. As an example, one decoding block may include two or more layers performing the same operation with each other. As an example, the apparatus for anonymizing personal information may include a layer that performs the adaptive instance normalization operation.

According to an example, the apparatus for anonymizing personal information may receive the latent vector generated by the encoding operation as the style vector and perform normalization. As an example, the adaptive instance normalization layer may receive a latent vector generated by performing a weighted summation of the results generated by one or more instance normalization layers as the style vector.

As another example, the adaptive instance normalization layer may receive each latent vector generated by the instance normalization layer of an operation of the encoder as the style vector. As an example, the adaptive instance normalization layer may receive the latent vector generated by the instance normalization layer having the same resolution as the style vector.

As another example, the instance normalization layer may receive a style vector generated based on the latent vector generated by the encoding operation by receiving the learning data set.

According to an example, the apparatus for anonymizing personal information may receive a predetermined content vector. As an example, the content vector may be a predetermined constant vector. In this case, the constant vector may be randomly generated.

According to an embodiment, the apparatus for anonymizing personal information may receive reconstructed data and real data to distinguish between genuine data and fake data (630).

According to an example, the apparatus for anonymizing personal information may use a generative adversarial network (GAN) structure to perform a discrimination function.

According to an example, the apparatus for anonymizing personal information may discriminate that the reconstructed data as one that is real or fake. As an example, the apparatus for anonymizing personal information may receive real data, and may be learned to discriminate that the reconstructed data is fake and the real data is real.

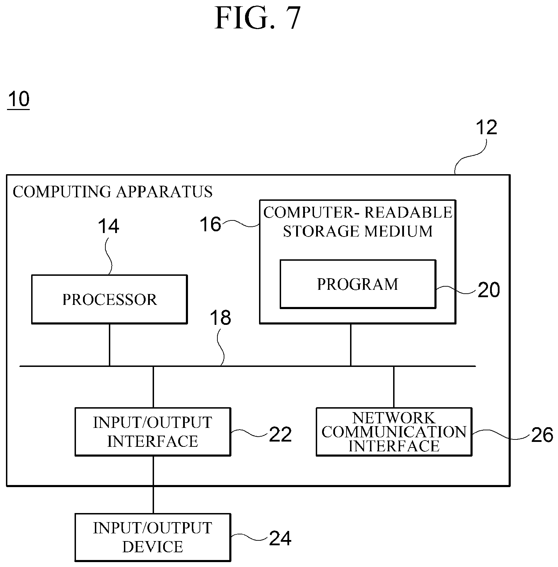

FIG. 7 is a block diagram for illustratively describing a computing environment including a computing device according to an embodiment.

In the illustrated embodiment, each component may have different functions and capabilities in addition to those described below, and additional components may be included in addition to those described below.

An illustrated computing environment 10 includes a computing device 12. In one embodiment, the computing device 12 may be one or more components included in the apparatus 100 for anonymizing personal information. The computing device 12 includes at least one processor 14, a computer-readable storage medium 16, and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured to cause the computing device 12 to perform operations according to the exemplary embodiment.

The computer-readable storage medium 16 is configured to store the computer-executable instruction or program code, program data, and/or other suitable forms of information. A program 20 stored in the computer-readable storage medium 16 includes a set of instructions executable by the processor 14. In one embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and capable of storing desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a voice or sound input device, input devices such as various types of sensor devices and/or photographing devices, and/or output devices such as a display device, a printer, a speaker, and/or a network card. The exemplary input/output device 24 may be included inside the computing device 12 as a component constituting the computing device 12, or may be connected to the computing device 12 as a separate device distinct from the computing device 12.

Although the present invention has been described in detail through representative examples above, those skilled in the art to which the present invention pertains will understand that various modifications may be made thereto within the limit that do not depart from the scope of the present invention. Therefore, the scope of rights of the present invention should not be limited to the described embodiments, but should be defined not only by claims set forth below but also by equivalents of the claims.

**Claims**

1. An apparatus for anonymizing personal information, comprising:

   an encoder configured to generate an input latent vector by extracting a feature of input data;
   a generator configured to generate reconstructed data by demodulating a predetermined content vector based on a style vector generated based on the input latent vector; and
   a discriminator configured to discriminate genuine data and fake data by receiving the reconstructed data and real data.

2. The apparatus of claim 1,
   wherein the encoder comprises one or more encoding blocks connected in series, and
   each of the one or more encoding blocks comprises a convolution layer, an instance normalization layer, and a down sampling layer,
   wherein the instance normalization layer generates individual latent vectors by calculating an average and standard deviation of input data input to each encoding block and performing affine transformation.

3. The apparatus of claim 2,
   wherein the encoder is further configured to generate the input latent vector by performing a weighted summation of one or more individual latent vectors generated by the one or more encoding blocks.

4. The apparatus of claim 1,
   wherein the encoder is trained based on a total loss generated by performing a weighted summation of a reconstruction loss generated based on a difference between the input data and the reconstructed data and an adversarial loss generated based on a result value of the discriminator for the reconstructed data.

5. The apparatus of claim 1,
   wherein the generator comprises one or more decoding blocks connected in series, and

each of the one or more decoding blocks comprises a convolution layer, an adaptive instance normalization layer, and an up sampling layer,

wherein each adaptive instance normalization layer included in the one or more decoding blocks adjusts an average and standard deviation of the content vectors input to each of the one or more decoding blocks based on an average and standard deviation of style vectors.

6. The apparatus of claim 5,

wherein the one or more decoding blocks are classified into two or more decoding block groups according to a connected order, and different types of style vectors are input according to the decoding block group,

wherein the style vector is one of

an entire learning latent vector generated by calculating a centroid of all of learning latent vectors included in a learning latent vector set generated by the encoder by receiving a learning data set,

one or more class learning latent vectors that are generated by classifying one or more learning latent vectors included in the learning latent vector set according to one or more criteria for each of one or more attributions and calculating the centroid for each classified learning latent vector, and

an input latent vector generated based on the input data.

7. The apparatus of claim 6,

wherein the entire learning latent vector, the class learning latent vector, and the input latent vector are input to the one or more decoding blocks according to the connected order,

wherein the decoding block receives a class learning latent vector corresponding to a class to which the input latent vector belongs among the one or more class learning latent vectors.

8. A method for anonymizing personal information comprises:

generating an input latent vector by extracting a feature of input data;

generating reconstructed data by demodulating a predetermined content vector based on a style vector generated based on the input latent vector; and

discriminating genuine data and fake data by receiving the reconstructed data and real data.

9. The method of claim 8,

wherein the generating of the input latent vector uses one or more encoding blocks connected in series, and each of the one or more encoding blocks comprises a convolution layer, an instance normalization layer, and a down sampling layer,

wherein the instance normalization layer generates individual latent vectors by calculating an average and standard deviation of input data input to each encoding block and performing affine transformation.

10. The method of claim 9,

wherein the generating of the input latent vector generates the input latent vector by performing a weighted summation of one or more individual latent vectors generated by the one or more encoding blocks.

11. The method of claim 8,

wherein in the generating the input latent vector, it is trained based on a total loss generated by performing a weighted summation of a reconstruction loss generated based on the difference between input data and reconstructed data and an adversarial loss generated based on a result value of the discriminator for the reconstructed data.

12. The method of claim 8,

wherein the generating of the reconstructed data uses one or more decoding blocks connected in series, and each of the one or more decoding blocks comprises a convolution layer, an adaptive instance normalization layer, and an up sampling layer,

wherein each adaptive instance normalization layer included in the one or more decoding blocks adjusts an average and standard deviation of the content vectors input to each of the one or more decoding blocks based on an average and standard deviation of the style vectors.

13. The method of claim 12,

wherein the one or more decoding blocks are classified into two or more decoding block groups according to a connected order, and different types of style vectors are input according to the decoding block group,

wherein the style vector is one of

an entire learning latent vector generated by calculating a centroid of all of learning latent vectors included in a learning latent vector set generated by receiving a learning data set,
one or more class learning latent vectors that are generated by classifying one or more learning latent vectors included in the learning latent vector set according to one or more criteria for each of one or more attributions and calculating the centroid for each classified learning latent vector, and
an input latent vector generated based on the input data.

14. The method of claim 13,
wherein the entire learning latent vector, the class learning latent vector, and the input latent vector are input to the one or more decoding blocks according to the connected order,
wherein the decoding block receives a class learning latent vector corresponding to a class to which the input latent vector belongs among the one or more class learning latent vectors.

# FIG. 1

ENCODER — 110

GENERATOR — 120

DISCRIMINATOR — 130

100

# FIG. 2

INPUT DATA

110

111
113
115
117

INDIVIDUAL LATENT VECTOR

W=INPUT LATENT VECTOR

CONVOLUTION LAYER
INSTANCE NORMALIZATION LAYER
DOWN SAMPLING LAYER

EP 3 985 568 A1

# FIG. 3

CONTENT VECTOR →

121 123 125 127

120

UP SAMPLING LAYER
CONVOLUTION LAYER
CONSTANT VECTOR
ADAPTIVE INSTANCE NORMALIZATION LAYER

W'=STYLE VECTOR

EP 3 985 568 A1

# FIG. 4

421 ENTIRE LEARNING LATENT VECTOR

423 CLASS LEARNING LATENT VECTOR

425 INPUT LATENT VECTOR

| | |
|---|---|
| UP SAMPLING LAYER | |
| CONVOLUTION LAYER | |
| CONSTANT VECTOR | |
| ADAPTIVE INSTANCE NORMALIZATION LAYER | |

EP 3 985 568 A1

# FIG. 5A

LEARNING LATENT
VECTOR

LEARNING LATENT
VECTOR SET

CENTROID LATENT
VECTOR

# FIG. 5B

# FIG. 6

```
          START
            │
            ▼
┌──────────────────────────────────┐
│  GENERATE INPUT LATENT VECTOR     │───~610
└──────────────────────────────────┘
            │
            ▼
┌──────────────────────────────────┐
│  GENERATE RECONSTRUCTED DATA      │───~620
└──────────────────────────────────┘
            │
            ▼
┌──────────────────────────────────┐
│ DISCRIMINATE RECONSTRUCTED DATA   │───~630
│         AND REAL DATA             │
└──────────────────────────────────┘
            │
            ▼
           END
```

# FIG. 7

<u>10</u>

12

COMPUTING APPARATUS

14

16

COMPUTER- READABLE
STORAGE MEDIUM

PROCESSOR

PROGRAM

20

18

INPUT/OUTPUT
INTERFACE

22

NETWORK
COMMUNICATION
INTERFACE

26

INPUT/OUTPUT
DEVICE

24

Europäisches
Patentamt

European
Patent Office

Office européen
des brevets

# EUROPEAN SEARCH REPORT

Application Number

EP 21 15 5483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN-PHUOC THU ET AL: "HoloGAN: Unsupervised Learning of 3D Representations From Natural Images", 2019 IEEE/CVF INTERNATIONAL CONFERENCE ON COMPUTER VISION WORKSHOP (ICCVW), IEEE, 27 October 2019 (2019-10-27), pages 2037-2040, XP033732567, DOI: 10.1109/ICCVW.2019.00255 [retrieved on 2020-03-02] | 1-3,8-10 | INV.<br>G06N3/04<br>G06F21/62<br>G06T3/00 |
| Y | * sections 2.1-2.3 *<br>* figure 2 * | 4-7,<br>11-14 | |
| Y | RUI ZHANG ET AL: "Style Separation and Synthesis via Generative Adversarial Networks", ARXIV.ORG, CORNELL UNIVERSITY LIBRARY, 201 OLIN LIBRARY CORNELL UNIVERSITY ITHACA, NY 14853, 7 November 2018 (2018-11-07), XP081047091, DOI: 10.1145/3240508.3240524 * section 3.3.5 * | 4,11 | |
| Y | TERO KARRAS ET AL: "A Style-Based Generator Architecture for Generative Adversarial Networks", ARXIV.ORG, CORNELL UNIVERSITY LIBRARY, 201 OLIN LIBRARY CORNELL UNIVERSITY ITHACA, NY 14853, 12 December 2018 (2018-12-12), XP081124391, * figure 1 * * Equation (1) * | 5-7,<br>12-14 | TECHNICAL FIELDS SEARCHED (IPC)<br><br>G06F<br>G06N<br>G06T |

The present search report has been drawn up for all claims

| Place of search | Date of completion of the search | Examiner |
|---|---|---|
| Munich | 13 July 2021 | Regidor Arenales, R |

EPO FORM 1503 03.82 (P04C01)